(19) **Europäisches Patentamt / European Patent Office / Office européen des brevets**

(11) **EP 4 626 093 A1**

(12) **EUROPEAN PATENT APPLICATION**
published in accordance with Art. 153(4) EPC

(43) Date of publication:
01.10.2025 Bulletin 2025/40

(21) Application number: 23915743.1

(22) Date of filing: 05.12.2023

(51) International Patent Classification (IPC):
*H04W 52/52* [(2009.01)]

(52) Cooperative Patent Classification (CPC):
H04W 52/08; H04W 52/10; H04W 52/14;
H04W 52/18; H04W 52/52; H04W 52/54

(86) International application number:
PCT/CN2023/136569

(87) International publication number:
WO 2024/148985 (18.07.2024 Gazette 2024/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.01.2023 CN 202310075365

(71) Applicant: Huawei Technologies Co., Ltd.
Shenzhen, Guangdong 518129 (CN)

(72) Inventors:
• GAO, Lin
Shenzhen, Guangdong 518129 (CN)

• SHI, Jie
Shenzhen, Guangdong 518129 (CN)
• TANG, Yunshuai
Shenzhen, Guangdong 518129 (CN)
• YUE, Huawei
Shenzhen, Guangdong 518129 (CN)
• FAN, Donglei
Shenzhen, Guangdong 518129 (CN)

(74) Representative: Gill Jennings & Every LLP
The Broadgate Tower
20 Primrose Street
London EC2A 2ES (GB)

(54) **METHOD AND APPARATUS FOR DETERMINING TRANSMISSION POWER**

(57) This application provides a transmit power determining method and an apparatus. The method includes: A first terminal device receives first information, where the first information includes identification information of a first group and a preset first target power spectral density corresponding to the first group; and the first terminal device determines a target transmit power based on the first information. According to the method, a terminal device may determine a target transmit power based on a target power spectral density corresponding to a group to which the terminal device belongs. This can not only ensure performance of a receiving side in receiving signals from a plurality of terminal devices, but also ensure quality of the signals transmitted by the terminal devices.

EP 4 626 093 A1

```
┌─────────────────────────┐                    ┌─────────────────────────┐
│     Network device      │                    │   First terminal device │
└─────────────────────────┘                    └─────────────────────────┘
```

S301: Generate first information, where the first information includes identification information of a first group and a preset first target power spectral density corresponding to the first group

S302: Send the first information

S303: Determine a target transmit power of the first terminal device based on the first information

S304: Transmit a first signal at the target transmit power

S305: Determine an adjustment amount for the transmit power of the first terminal device based on a strength of the received first signal and the preset first target power spectral density

S306: Send second information, where the second information indicates the adjustment amount for the transmit power of the first terminal device

S307: Adjust the target transmit power of the first terminal device based on the second information

FIG. 3

**Description**

CROSS-REFERENCE TO RELATED APPLICATIONS

This application claims priority to Chinese Patent Application No. 202310075365.X, filed with the China National Intellectual Property Administration on January 12, 2023 and entitled "TRANSMIT POWER DETERMINING METHOD AND APPARATUS", which is incorporated herein by reference in its entirety.

TECHNICAL FIELD

This application relates to the field of communication technologies, and in particular, to a transmit power determining method and an apparatus.

BACKGROUND

In a wireless communication system, when receiving signals of different strengths, a receiving side may automatically adjust gains of the signals through automatic gain control (automatic gain control, AGC), so that the signals maintain relatively high strengths without being saturated. This can ensure reception sensitivity to some extent.

In communication protocols such as SparkLink (SparkLink) protocols and mobile cellular communication protocols, because resource allocation between a base station and a terminal device can support frequency division and/or time division, the base station may receive signals from a plurality of terminal devices in one time period. However, transmit powers of these terminal devices and distances between the base station and these terminal devices may be all different. Therefore, actual strengths of the signals received by the base station from these terminal devices are different, and even dynamic ranges of the strengths of these signals may exceed a range that can be covered by one level of AGC. Consequently, some of the signals are saturated while others have excessively low gains. To resolve the foregoing problem, in a current uplink power control solution, the base station broadcasts an expected received power spectral density (power spectral density, PSD), and all terminal devices in a network may determine or adjust respective transmit powers based on the PSD, resource bandwidths allocated to the terminal devices, and corresponding path losses, so that signals transmitted by all the terminal devices correspond to a same PSD or close PSDs when reaching a receiver of the base station. As a result, the base station can receive the signals from these terminal devices using an appropriate level of AGC, to ensure performance of the base station in receiving signals from a plurality of terminal devices. However, in this solution, a terminal device at a shorter distance from the base station needs to significantly decrease a transmit power, causing a signal-to-noise ratio of a signal transmitted by the terminal device to be limited. In addition, a terminal device at a longer distance from the base station may not be able to achieve a target PSD by increasing a transmit power.

Besides, in a current downlink power determining solution, a transmit power of the base station may usually be a constant value, or a maximum transmit power that meets a preset requirement. However, an error vector magnitude (error vector magnitude, EVM) of a signal is degraded with an increase in the transmit power of the base station, and it is not optimal that the base station transmits a signal at the maximum transmit power to a terminal device that is at a short distance.

In view of the foregoing problems, how to effectively determine an appropriate uplink/downlink transmit power to ensure quality of a transmitted signal is still one of urgent problems to be resolved currently.

SUMMARY

A transmit power determining method and an apparatus are provided, to effectively determine an appropriate transmit power and therefore ensure quality of a transmitted signal.

According to a first aspect, this application provides a transmit power determining method. The method may be performed by a first terminal device, or may be performed by a component (for example, a processor, a chip, or a chip system) of the first terminal device. This is not specifically limited in this application. The method may specifically include the following steps: The first terminal device receives first information, where the first information includes identification information of a first group and a preset first target power spectral density corresponding to the first group; and the first terminal device determines a target transmit power based on the first information.

In the solutions of this application, the first terminal device receives the first information, where the first information includes the identification information of the first group and the preset first target power spectral density corresponding to the first group; and the first terminal device determines the target transmit power based on the first information. Therefore, it can be learned that the first terminal device belongs to the first group. Then, the first terminal device may determine the transmit power based on the preset first target power spectral density corresponding to the first group. In comparison with that all terminal devices determine transmit powers based on a delivered unified target power spectral density in an existing solution, a terminal device may determine a transmit power based on a target power spectral density corresponding to a group to which the terminal device belongs, in the solutions of this application. As a result, the solutions of this application have resistance to burst interference. This can not only ensure performance of a receiving side in receiving signals from a plurality of terminal devices, but also ensure quality of the signals transmitted by the terminal devices.

In a possible implementation, the method further includes: The first terminal device receives a first reference signal and a transmit power of the first reference signal; and the first terminal device sends first path loss information, where the first path loss information is determined based on a strength of the received first reference signal and the transmit power of the first reference signal; or the first terminal device sends a second reference signal and a transmit power of the second reference signal, where the second reference signal and the transmit power of the second reference signal are used to determine first path loss information.

In embodiments of this application, the path loss information may be a path loss value, or information related to a path loss. This is not limited herein.

In this implementation, uplink path loss information corresponding to the first terminal device can be effectively determined.

In a possible implementation, that the first terminal device determines a target transmit power based on the first information includes: The first terminal device determines the target transmit power of the first terminal device based on the preset first target power spectral density, the first path loss information, and time-frequency resource information of the first terminal device.

In this implementation, the first terminal device can effectively determine the target transmit power of the first terminal device.

In a possible implementation, the method further includes: The first terminal device transmits a first signal at the target transmit power; the first terminal device receives second information, where the second information indicates an adjustment amount for the transmit power of the first terminal device; and the first terminal device adjusts the target transmit power based on the second information.

In this implementation, the first terminal device receives a power adjustment amount fed back by the receiving side, so that the first terminal device can effectively adjust the target transmit power of the first terminal device. This can improve quality of a signal received by the receiving side from the first terminal device.

In a possible implementation, that the first terminal device receives first information includes: The first terminal device receives the first information sent in a unicast mode; or the first terminal device receives a system message sent in a broadcast mode, and parses the system message to obtain the first information.

In this implementation, the first information may be flexibly sent to the first terminal device.

In a possible implementation, path loss values of terminal devices in the first group are the same, or a difference between path loss values of terminal devices in the first group is less than a first value.

In this implementation, terminal devices whose path loss values are the same or close are grouped into a same group, so that terminal devices whose received signal strength indicators (RSSIs) are the same or close can be effectively grouped into a same group. This can ensure interference resistance of a terminal device that is at a short distance.

In a possible implementation, the first terminal device and another terminal device in the first group perform uplink transmission in a time division multiplexing manner or a frequency division multiplexing manner, and the first terminal device and a terminal device in another group perform uplink transmission in a time division multiplexing manner.

In this implementation, uplink transmission performed by terminal devices in a same group may not be limited by a communication time or frequency, and terminal devices in different groups perform uplink transmission at different times. This can ensure performance of the receiving side in receiving signals from a plurality of terminal devices.

According to a second aspect, this application provides a transmit power determining method, where the method includes: generating first information, where the first information includes identification information of a first group and a preset first target power spectral density corresponding to the first group; and sending the first information to a first terminal device.

In embodiments of this application, the transmit power determining method described in the second aspect may be implemented by a network device, or may be implemented by a component of the network device, for example, a processing chip or a circuit in the network device. In addition, a specific form of the network device is not limited in embodiments of this application.

For example, the network device may be an access network device such as a base station.

In the solutions of this application, the network device generates the first information, where the first information includes the identification information of the first group and the preset first target power spectral density corresponding to the first group; and the network device sends the first information to the first terminal device. Therefore, it can be learned that the first terminal device belongs to the first group. After the first terminal device obtains the identification information of the first group and the corresponding preset first target power spectral density by receiving the first information, the first terminal device may determine a transmit power based on the preset first target power spectral density corresponding to the first group. In comparison with that all terminal devices determine transmit powers based on a delivered unified target power spectral density in an existing solution, a terminal device may determine a transmit power based on a target power spectral density corresponding to a group to which the terminal device belongs, in the solutions of this application. As a result, the solutions of this application have resistance to burst interference. This can not only ensure performance of a receiving side in receiving signals from a plurality of terminal devices, but also ensure quality of the signals transmitted by the terminal devices.

In a possible implementation, before the generating first information, the method further includes: determining first path loss information of the first terminal device; determining, based on the first path loss information, that the first terminal device belongs to the first group; and then determining the preset first target power spectral density corresponding to the first group.

In this implementation, it can be effectively determined, based on the path loss information of the first terminal device, that the first terminal device belongs to the first group, so that the corresponding preset first target power spectral density can be effectively and accurately determined.

In a possible implementation, the determining first path loss information of the first terminal device includes: sending a reference signal and transmit power information of the reference signal to the first terminal device; and receiving the first path loss information from the first terminal device, where the first path loss information is determined based on a strength of the received reference signal and the transmit power information of the reference signal; or receiving a reference signal and transmit power information of the reference signal from the first terminal device; and determining the first path loss information based on a strength of the received reference signal and the transmit power information.

In this implementation, the path loss information corresponding to the first terminal device, namely, path loss information between the first terminal device and the receiving side (the network device), can be effectively determined.

In a possible implementation, the first path loss information is a first path loss value, and the determining, based on the first path loss information, that the first terminal device belongs to the first group includes: determining, based on the first path loss value and preset first mapping information, that the first terminal device belongs to the first group, where the preset first mapping information includes a correspondence between the first path loss value and the identification information of the first group; or determining, based on the first path loss value, that the first path loss value falls within a path loss range corresponding to the first group, and determining that the first terminal device belongs to the first group.

In this implementation, a group to which the first terminal device belongs can be effectively determined based on the path loss information (the path loss value) corresponding to the first terminal device.

In a possible implementation, the determining the preset first target power spectral density corresponding to the first group includes: determining the preset first target power spectral density based on the identification information of the first group and preset second mapping information, where the preset second mapping information includes correspondences between identification information of a plurality of groups and a plurality of target power spectral densities, identification information of each group corresponds to one target power spectral density, and the identification information of the plurality of groups includes the identification information of the first group.

In this implementation, the preset first target power spectral density corresponding to the first group can be effectively and accurately determined.

In a possible implementation, the method further includes: receiving a first signal transmitted by the first terminal device; determining an adjustment amount for the transmit power of the first terminal device based on a strength of the received first signal and the preset first target power spectral density; and sending second information to the first terminal device, where the second information indicates the adjustment amount for the transmit power of the first terminal device.

In this implementation, the adjustment amount for the transmit power of the first terminal device can be effectively and accurately determined. Then, the adjustment amount is fed back to the first terminal device through the second information, so that the first terminal device can adjust the target transmit power of the first terminal device based on the adjustment amount. This can effectively improve quality of a signal received by the receiving side from the first terminal device.

In a possible implementation, the determining an adjustment amount for the transmit power of the first terminal device based on a strength of the received first signal and the preset first target power spectral density includes: determining the transmit power of the first terminal device based on the preset first target power spectral density, the first path loss information of the first terminal device, and time-frequency resource information of the first terminal device; and determining the adjustment amount based on the strength of the received first signal and the transmit power of the first terminal device.

In this implementation, the adjustment amount for the transmit power of the first terminal device can be effectively and accurately determined.

In a possible implementation, the sending the first information to a first terminal device includes: sending the first information to the first terminal device in a unicast mode; or sending a system message to the first terminal device in a broadcast mode, where the system message carries the first information.

In this implementation, the first information may be sent to the first terminal device in a flexible communication manner.

In a possible implementation, path loss values of terminal devices in the first group are the same, or a difference between path loss values of terminal devices in the first group is less than a first value.

In this implementation, terminal devices whose path loss values are the same or close are grouped into a same group, so that terminal devices whose received signal strength indicators (RSSIs) are the same or close can be effectively grouped into a same group. This can ensure interference resistance of a terminal device that is at a short distance.

In a possible implementation, the first terminal device and another terminal device in the first group perform uplink transmission in a time division multiplexing manner or a frequency division multiplexing manner, and the first terminal device and a terminal device in another group perform uplink transmission in a time division multiplexing manner.

In this implementation, uplink transmission performed by terminal devices in a same group may not be limited by a communication time or frequency, and terminal devices in different groups perform uplink transmission at different times. This can ensure performance of the receiving side in receiving signals from a plurality of terminal devices.

The first aspect and the second aspect correspond to an uplink transmit power determining method provided in embodiments of this application. An embodiment of this application further provides a downlink transmit power determining method. For details, refer to content in the following third aspect.

According to a third aspect, this application provides a transmit power determining method, where the method includes: determining that a first terminal device belongs to a first group; and transmitting a signal to the first terminal device at a first target transmit power, where the first target transmit power is a transmit power corresponding to the first group.

In embodiments of this application, the transmit power determining method described in the third aspect may be implemented by a network device, or may be implemented by a component of the network device, for example, a processing chip or a circuit in the network device. In addition, a specific form of the network device is not limited in embodiments of this application.

For example, the network device may be an access network device such as a base station.

In the solutions of this application, the network device determines that the first terminal device belongs to the first group, and then transmits the signal to the first terminal device at the target transmit power corresponding to the first group. Therefore, it can be learned that according to the method, the network device transmits a signal to each terminal device at a target transmit power corresponding to a group to which the terminal device belongs. This can ensure quality of the signal received by each terminal device from the network device.

In a possible implementation, the determining that a first terminal device belongs to a first group includes: determining first path loss information of the first terminal device; and then determining, based on the first path loss information, that the first terminal device belongs to the first group.

In this implementation, a group to which the first terminal device belongs can be effectively and accurately determined based on the path loss information of the first terminal device.

In a possible implementation, the determining first path loss information of the first terminal device includes: sending a first reference signal and transmit power information of the first reference signal to the first terminal device; and receiving the first path loss information from the first terminal device, where the first path loss information is determined based on a strength of the received first reference signal and the transmit power information of the first reference signal; or receiving a second reference signal and transmit power information of the second reference signal from the first terminal device; and determining the first path loss information based on a strength of the received second reference signal and the transmit power information of the second reference signal.

In this implementation, the path loss information of the first terminal device can be effectively determined.

In a possible implementation, the first path loss information is a first path loss value, and the determining, based on the first path loss information, that the first terminal device belongs to the first group may be implemented in, but not limited to, the following manners:

Manner 1: Determining, based on the first path loss value and preset first mapping information, that the first terminal device belongs to the first group, where the preset first mapping information includes a correspondence between the first path loss value and identification information of the first group.

Manner 2: Determining, based on the first path loss value, that the first path loss value falls within a path loss range corresponding to the first group, and determining that the first terminal device belongs to the first group.

In this implementation, the group to which the first terminal device belongs can be effectively determined based on the path loss value corresponding to the first terminal device.

In a possible implementation, the method further includes: determining the corresponding first target transmit power based on the first group and preset third mapping information, where the preset third mapping information includes correspondences between identification information of a plurality of groups and a plurality of target transmit powers, identification information of each group corresponds to one target transmit power, and the identification information of the plurality of groups includes the identification information of the first group.

In this implementation, the first target transmit power (a transmit power of the network device) corresponding to the first group can be effectively and accurately determined.

In a possible implementation, path loss values of terminal devices in the first group are the same, or a difference between path loss values of terminal devices in the first group is less than a first value.

In this implementation, terminal devices whose path loss values are the same or close are grouped into a same group, so that terminal devices whose received signal strength indicators (RSSIs) are the same or close can be effectively grouped into a same group. This can ensure interference resistance of a terminal device that is at a short distance.

In a possible implementation, terminal devices in the first group perform downlink transmission in a time division multiplexing manner or a frequency division multiplexing manner, and the first terminal device and a terminal device in another group perform downlink transmission in a time division multiplexing manner.

In this implementation, downlink transmission performed by terminal devices in a same group may not be limited by a communication time or frequency, and terminal devices in different groups perform downlink transmission at different times. This can ensure quality of a signal received by each terminal device.

According to a fourth aspect, an embodiment of this application further provides a communication apparatus. The communication apparatus may be configured to perform the method according to the first aspect. The communication apparatus may be a first terminal device, or may be a component (for example, a chip, a chip system, or a circuit) in the first terminal device, or may be an apparatus that can be used in combination with the first terminal device.

In a possible implementation, the communication apparatus may include modules or units that are in one-to-one correspondence with the method/operations/steps/actions described in the first aspect. The module or unit may be a hardware circuit or software, or may be implemented by a hardware circuit in combination with software. In a possible implementation, the communication apparatus may include a communication module (which may also be referred to as a transceiver module) and a processing module. The processing module is configured to invoke the communication module to perform a receiving function and/or a sending function.

In a possible implementation, the communication apparatus includes a communication unit (which may also be referred to as a transceiver unit) and a processing unit. The communication unit is configured to receive first information, where the first information includes identification information of a first group and a preset first target power spectral density corresponding to the first group. The processing unit is configured to determine a target transmit power based on the first information.

In a possible implementation, the communication unit is further configured to: receive a first reference signal and a transmit power of the first reference signal; and send first path loss information, where the first path loss information is determined based on a strength of the received first reference signal and the transmit power of the first reference signal; or the communication unit is further configured to send a second reference signal and a transmit power of the second reference signal, where the second reference signal and the transmit power of the second reference signal are used to determine first path loss information.

In a possible implementation, when determining the target transmit power based on the first information, the processing unit is specifically configured to determine the target transmit power based on the preset first target power spectral density, the first path loss information, and time-frequency resource information of the communication apparatus.

In a possible implementation, the communication unit is further configured to: transmit a first signal at the target transmit power; receive second information, where the second information indicates an adjustment amount for the transmit power of the communication apparatus; and adjust the target transmit power through the processing unit based on the second information.

In a possible implementation, when receiving the first information, the communication unit is specifically configured to: receive the first information sent in a unicast mode; or receive a system message sent in a broadcast mode, and parse the system message to obtain the first information.

In a possible implementation, path loss values of terminal devices in the first group are the same, or a difference between path loss values of terminal devices in the first group is less than a first value.

In a possible implementation, the communication apparatus and another terminal device in the first group perform uplink transmission in a time division multiplexing manner or a frequency division multiplexing manner, and the communication apparatus and a terminal device in another group perform uplink transmission in a time division multiplexing manner.

According to a fifth aspect, an embodiment of this application further provides a communication apparatus. The communication apparatus may be configured to perform the method according to the second aspect. The communication apparatus may be a network device (for example, a base station), or may be a component (for example, a chip, a chip system, or a circuit) in the network device, or may be an apparatus that can be used in combination with the network device.

In a possible implementation, the communication apparatus may include modules or units that are in one-to-one correspondence with the method/operations/steps/actions described in the second aspect. The module or unit may be a hardware circuit or software, or may be implemented by a hardware circuit in combination with software. In a possible implementation, the communication apparatus may include a communication module (which may also be referred to as a transceiver module) and a processing module. The processing module is configured to invoke the communication module to perform a receiving function and/or a sending function.

In a possible implementation, the communication apparatus includes a communication unit (which may also be referred to as a transceiver unit) and a processing unit. The processing unit is configured to generate first information, where the first information includes identification information of a first group and a preset first target power spectral density corresponding to the first group. The communication unit is configured to send the first information to a first terminal device.

In a possible implementation, the processing unit is further configured to: before generating the first information, determine first path loss information of the first terminal device; determine, based on the first path loss information, that the first terminal device belongs to the first group; and determine the corresponding preset first target power spectral density based on the first group.

In a possible implementation, when determining the first path loss information of the first terminal device, the processing unit is specifically configured to: send a first reference signal and transmit power information of the first reference signal to the first terminal device through the communication unit; and receive the first path loss information from the first terminal device, where the first path loss information is determined based on a strength of the received first reference signal and the transmit power information of the first reference signal; or receive a second reference signal and transmit power information of the second reference signal from the first terminal device through the communication unit; and determine the first path loss information based on a strength of the received second reference signal and the transmit power information of the second reference signal.

In a possible implementation, the first path loss information is a first path loss value, and when determining, based on the first path loss information, that the first terminal device belongs to the first group, the processing unit is specifically configured to: determine, based on the first path loss value and preset first mapping information, that the first terminal device belongs to the first group, where the preset first mapping information includes a correspondence between the first path loss value and the identification information of the first group; or determine, based on the first path loss value, that the first path loss value falls within a path loss range corresponding to the first group, and determine that the first terminal device belongs to the first group.

In a possible implementation, when determining the preset first target power spectral density corresponding to the first group, the processing unit is specifically configured to: determine the preset first target power spectral density based on the identification information of the first group and preset second mapping information, where the preset second mapping information includes correspondences between identification information of a plurality of groups and a plurality of target power spectral densities, identification information of each group corresponds to one target power spectral density, and the identification information of the plurality of groups includes the identification information of the first group.

In a possible implementation, the communication unit is further configured to: receive a first signal transmitted by the first terminal device; determine an adjustment amount for a transmit power of the first terminal device through the processing unit based on a strength of the received first signal and the preset first target power spectral density; and send second information to the first terminal device, where the second information indicates the adjustment amount for the transmit power of the first terminal device.

In a possible implementation, when determining the adjustment amount for the transmit power of the first terminal device based on the strength of the received first signal and the preset first target power spectral density, the processing unit is specifically configured to: determine the transmit power of the first terminal device based on the preset first target power spectral density, the first path loss information of the first terminal device, and time-frequency resource information of the first terminal device; and determine the adjustment amount based on the strength of the received first signal and the transmit power of the first terminal device.

In a possible implementation, when sending the first information to the first terminal device, the communication unit is specifically configured to: send the first information to the first terminal device in a unicast mode; or send a system message to the first terminal device in a broadcast mode, where the system message carries the first information.

In a possible implementation, path loss values of terminal devices in the first group are the same, or a difference between path loss values of terminal devices in the first group is less than a first value.

In a possible implementation, the first terminal device and another terminal device in the first group perform uplink transmission with the base station in a time division multiplexing manner or a frequency division multiplexing manner, and the first terminal device and a terminal device in another group perform uplink transmission with the base station in a time division multiplexing manner.

According to a sixth aspect, an embodiment of this application further provides a communication apparatus. The communication apparatus may be configured to perform the method according to the third aspect. The communication apparatus may be a network device (for example, a base station), or may be a component (for example, a chip, a chip system, or a circuit) in the network device, or may be an apparatus that can be used in combination with the network device.

In a possible implementation, the communication apparatus may include modules or units that are in one-to-one correspondence with the method/operations/steps/actions described in the third aspect. The module or unit may be a hardware circuit or software, or may be implemented by a hardware circuit in combination with software. In a possible implementation, the communication apparatus may include a communication module (which may also be referred to as a transceiver module) and a processing module. The processing module is configured to invoke the communication module to perform a receiving function and/or a sending function.

In a possible implementation, the communication apparatus includes a communication unit (which may also be referred to as a transceiver unit) and a processing unit. The processing unit is configured to determine that a first terminal device belongs to a first group. The communication unit is configured to transmit a signal to the first terminal device at a first target transmit power, where the first target transmit power is a transmit power corresponding to the first group.

In a possible implementation, when determining that the first terminal device belongs to the first group, the processing unit is specifically configured to: determine first path loss information of the first terminal device; and then determine, based on the first path loss information, that the first terminal device belongs to the first group.

In a possible implementation, when determining the first path loss information of the first terminal device, the processing unit is specifically configured to: send a first reference signal and transmit power information of the first reference signal to the first terminal device through the communication unit; and receive the first path loss information from the first terminal device, where the first path loss information is determined based on a strength of the received first reference signal and the transmit power information of the first reference signal; or receive a second reference signal and transmit power information of the second reference signal from the first terminal device through the communication unit; and determine the first path loss information based on a strength of the received second reference signal and the transmit power information of the second reference signal.

In a possible implementation, the first path loss information is a first path loss value, and when determining, based on the first path loss information, that the first terminal device belongs to the first group, the processing unit is specifically configured to: determine, based on the first path loss value and preset first mapping information, that the first terminal device belongs to the first group, where the preset first mapping information includes a correspondence between the first path loss value and identification information of the first group; or determine, based on the first path loss value, that the first path loss value falls within a path loss range corresponding to the first group, and determine that the first terminal device belongs to the first group.

In a possible implementation, the processing unit is further configured to: determine the corresponding first target transmit power based on the first group and preset third mapping information, where the preset third mapping information includes correspondences between identification information of a plurality of groups and a plurality of target transmit powers, identification information of each group corresponds to one target transmit power, and the identification information of the plurality of groups includes the identification information of the first group.

In a possible implementation, path loss values of terminal devices in the first group are the same, or a difference between path loss values of terminal devices in the first group is less than a first value.

In a possible implementation, terminal devices in the first group perform downlink transmission in a time division multiplexing manner or a frequency division multiplexing manner, and the first terminal device and a terminal device in another group perform downlink transmission in a time division multiplexing manner.

According to a seventh aspect, an embodiment of this application provides a communication apparatus, where the apparatus includes at least one processor and an interface circuit. The interface circuit is configured to provide input and/or output of a program or instructions for the at least one processor. The at least one processor is configured to execute the program or the instructions, to enable the communication apparatus to implement the method according to the first aspect or any one of the possible implementations of the first aspect. Alternatively, the at least one processor is configured to execute the program or the instructions, to enable the communication apparatus to implement the method according to the second aspect or any one of the possible implementations of the second aspect.

According to an eighth aspect, an embodiment of this application provides a communication apparatus, where the apparatus includes at least one processor and an interface circuit. The interface circuit is configured to provide input and/or output of a program or instructions for the at least one processor. The at least one processor is configured to execute the program or the instructions, to enable the communication apparatus to implement the method according to the third aspect or any one of the possible implementations of the third aspect.

According to a ninth aspect, an embodiment of this application provides a computer storage medium, where the storage medium stores a software program, and when the software program is read and executed by one or more processors, the method according to the first aspect or any one of the possible implementations of the first aspect can be implemented, or the method according to the second aspect or any one of the possible implementations of the second aspect can be implemented.

According to a tenth aspect, an embodiment of this application provides a computer storage medium, where the storage medium stores a software program, and when the software program is read and executed by one or more processors, the method according to the third aspect or any one of the possible implementations of the third aspect can be implemented.

According to an eleventh aspect, an embodiment of this application provides a computer program product including instructions. When the instructions are run on a computer, the computer is enabled to perform the method according to the first aspect or any one of the possible implementations of the first aspect, or the computer is enabled to perform the method according to the second aspect or any one of the possible implementations of the second aspect, or the computer is enabled to perform the method according to the third aspect or any one of the possible implementations of the third aspect.

According to a twelfth aspect, an embodiment of this application provides a chip system. The chip system includes a processor, configured to: support a device in implementing a function in the first aspect, or support a device in implementing a function in the second aspect, or support a device in implementing a function in the third aspect.

In a possible design, the chip system further includes a memory. The memory is configured to store necessary program instructions and data. The chip system may include a chip, or may include a chip and another discrete component.

According to a thirteenth aspect, an embodiment of this application further provides a chip system, where the chip system includes a processor and an interface. The interface is configured to obtain a program or instructions. The processor is configured to invoke the program or the instructions to implement or support a device in implementing a function in the first aspect. Alternatively, the processor is configured to invoke the program or the instructions to implement or support a device in implementing a function in the second aspect. Alternatively, the processor is configured to invoke the program or the instructions to implement or support a device in implementing a function in the third aspect.

In a possible design, the chip system further includes a memory. The memory is configured to store program instructions and data that are necessary for a terminal device. The chip system may include a chip, or may include a chip and another discrete component.

For technical effects that can be achieved in any one of the fourth aspect to the thirteenth aspect or any one of the possible implementations of the fourth aspect to the thirteenth aspect, refer to the descriptions of the technical effects that can be achieved in any one of the first aspect to the third aspect or any one of the possible implementations of the first aspect to the third aspect. Details are not described herein again.

BRIEF DESCRIPTION OF DRAWINGS

FIG. 1 is a diagram of a communication architecture according to an embodiment of this application;

FIG. 2 is a diagram of PSDs, expected by a base station, from nodes on a time axis;

FIG. 3 is a schematic flowchart of an (uplink) transmit power determining method according to an embodiment of this application;

FIG. 4 is a diagram of target PSDs corresponding to different groups according to an embodiment of this application;

FIG. 5 is a schematic flowchart of a (downlink) transmit power determining method according to an embodiment of this application;

FIG. 6 is a diagram of a structure of a communication apparatus according to an embodiment of this application;

FIG. 7 is a diagram of a structure of a communication apparatus according to an embodiment of this application; and

FIG. 8 is a diagram of an apparatus structure of a chip according to an embodiment of this application.

DESCRIPTION OF EMBODIMENTS

In a wireless communication system, when receiving signals of different strengths, a receiving side may automatically adjust gains of the signals through automatic gain control (automatic gain control, AGC), so that the signals maintain relatively high strengths without being saturated. This can ensure reception sensitivity to some extent.

In some communication protocols such as SparkLink (SparkLink) protocols and mobile cellular communication protocols, because resource allocation between a base station and a terminal device can support frequency division multiplexing or time division multiplexing or both frequency division multiplexing and time division multiplexing, the base station may receive signals from a plurality of terminal devices in one time period. However, transmit powers of these terminal devices and distances between the base station and these terminal devices may be all different. Therefore, actual strengths of the signals received by the base station from these terminal devices are different, and even dynamic ranges of the strengths of these signals may exceed a range that can be covered by one level of AGC. Consequently, some of the signals are saturated while others have excessively low gains.

To resolve the foregoing problem, an uplink power control (or determining) solution is currently provided, including two implementations: open-loop power control and closed-loop power control, so that signals from a plurality of terminal devices correspond to a same power spectral density PSD or close PSDs. For example, the base station broadcasts an expected received power spectral density (power spectral density, PSD), and all terminal devices in a network may determine or adjust respective transmit powers based on the PSD, resource bandwidths allocated to the terminal devices, and corresponding path losses, so that signals transmitted by all the terminal devices correspond to a same PSD or close PSDs when reaching a receiver of the base station. As a result, the base station can receive the signals from these terminal devices using an appropriate level of AGC, to ensure performance of the base station in receiving signals from a plurality of terminal devices. Scenarios to which this solution can be applied need to have the following characteristics:

(a) Terminal devices are relatively far away from a base station, at distances of approximately 100 m, and strengths of signals from different terminal devices do not differ greatly. For example, UEs each have an operating frequency of 2 GHz and are at a distance within [100 m, 150 m], a path loss range is [78 dB, 82 dB], and a dynamic range is 4 dB.
(b) A wireless communication system operates in a licensed spectrum, an interference source is usually an interference signal that is leaked from a neighboring cell and whose strength is stable and controllable, and there is no need to consider burst and strong interference signals.

However, for a cellular-like communication system that operates in an unlicensed spectrum and has a short-range (approximately 10 m) coverage, the foregoing solution has the following disadvantages:
A terminal device at a shorter distance from a base station needs to significantly decrease a transmit power of the terminal device, directly causing a signal-to-noise ratio of a signal transmitted by the terminal device to be limited. A terminal device at a longer distance from the base station may not be able to increase a PSD to a target value, resulting in a loss of a signal-to-noise ratio during reception performed by the base station. Therefore, the current uplink power control solution does not have resistance to burst interference.

Besides, in a current downlink power control (or determining) solution, a transmit power of the base station may usually be a constant value, or a maximum transmit power that meets a preset requirement. However, an error vector magnitude (error vector magnitude, EVM) of a signal is degraded with an increase in the transmit power of the base station, and it is not optimal that the base station transmits a signal at the maximum transmit power to a terminal device that is at a short distance.

In conclusion, how to effectively determine an appropriate uplink/downlink transmit power to ensure quality of a transmitted signal is still one of urgent problems to be resolved currently.

In view of the foregoing problems, an embodiment of this application provides a transmit power determining method, to effectively determine an appropriate uplink/downlink transmit power and therefore improve quality of a transmitted signal. In this solution, the method and an apparatus are based on a same technical concept. The method and the apparatus have similar principles for resolving the problems. Therefore, mutual reference may be made to implementations of the apparatus and the method. No repeated description is provided.

Technical solutions in embodiments of this application may be applied to various communication systems, for example, may be applied to a communication system such as an LTE system, a 5th generation (5th generation, 5G) system, or a SparkLink system, or may be applied to a wireless fidelity (wireless fidelity, Wi-Fi) system, a worldwide interoperability for microwave access (worldwide interoperability for microwave access, WiMAX) system, or a future communication system such as a future 6th generation (6th generation, 6G) system. 5G may also be referred to as new radio (new radio, NR).

A communication system includes communication devices, and wireless communication may be performed between the communication devices by using an air interface resource. The communication devices may include a network device and a terminal device, and the network device may also be referred to as a network-side device. The air interface resource may include at least one of a time domain resource, a frequency domain resource, a code resource, and a space resource. In embodiments of this application, at least one (type) may be one (type), two (types), three (types), or more (types). This is not limited in embodiments of this application.

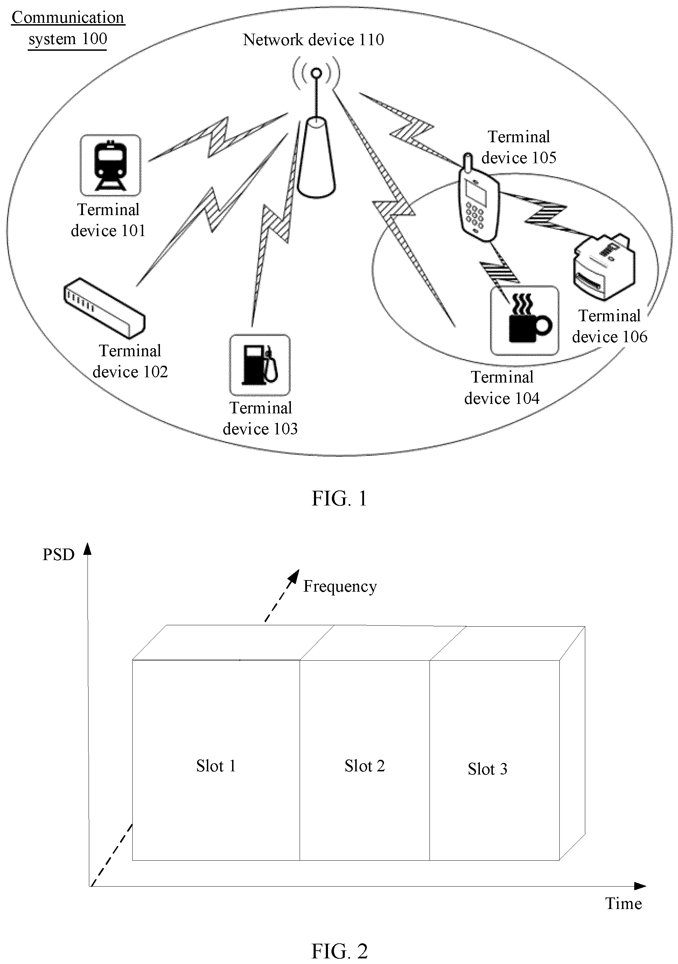

For example, an architecture of a communication system to which embodiments of this application are applied may be shown in FIG. 1, including a network device and a plurality of terminal devices. It should be noted that a quantity of terminal devices and a quantity of network devices in the communication system shown in FIG. 1 are not limited in embodiments of this application. Wireless communication between communication devices may include wireless communication between the network device and the terminal device, wireless communication between the terminal devices, and the like. In embodiments of this application, the term "wireless communication" may be briefly referred to as "communication", and the term "communication" may alternatively be described as "data transmission", "information transmission", "signal transmission", or "transmission". Transmission may include sending and/or receiving. For example, transmission between the network device and the terminal device includes the following: The network device sends a downlink signal to the terminal device, that is, the terminal device receives the downlink signal from the network device; and/or the terminal device sends an uplink signal to the network device, that is, the network device receives the uplink signal from the terminal device.

In embodiments of this application, communication between the network device and the terminal device is used as an example for description. A person skilled in the art may use the technical solutions provided in embodiments of this application for wireless communication between another scheduling entity and a subordinate entity, for example, wireless communication between a macro base station and a micro base station, or wireless communication between a first terminal device and a second terminal device. This is not limited in embodiments of this application.

Before embodiments of this application are described, some terms in embodiments of this application are first described to facilitate understanding of the person skilled in the art.

(1) A terminal device may be a device with a wireless transceiver function, and may also be referred to as a terminal. The terminal device may be deployed on land, where the deployment includes indoor or outdoor deployment, or handheld or vehicle-mounted deployment, may be deployed on water (for example, on a ship), or may be deployed in the air (for example, on an airplane, a balloon, or a satellite). The terminal device may be a user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in smart grid, a wireless terminal in smart city (smart city), a wireless terminal in smart home (smart home), or the like. In addition, product forms to which embodiments of this application may be applied may further include a router, an audio transmission device, a video transmission device, and the like.

In embodiments of this application, an apparatus for implementing a function of the terminal device may be the terminal device, or may be an apparatus that can support the terminal device in implementing the function, for example, a chip system. The apparatus may be installed in the terminal device or used in combination with the terminal device. In embodiments of this application, the chip system may include a chip, or may include a chip and another discrete component. In embodiments of this application, an example in which the apparatus for implementing the function of the terminal device is the terminal device may be used for description.

(2) A network device may be a device deployed in a radio access network and capable of performing wireless communication with a terminal device. The network device may be a base station (base station, BS). The base station may be in a plurality of forms such as a macro base station, a micro base station, a relay station, and an access point. For example, the base station in embodiments of this application may be a base station in 5G or a base station in LTE. The base station in 5G may also be referred to as a transmission-reception point (transmission-reception point, TRP) or a gNB.

In embodiments of this application, an apparatus for implementing a function of the network device may be the network device, or may be an apparatus that can support the network device in implementing the function, for example, a chip system. The apparatus may be installed in the network device or used in combination with the network device. In embodiments of this application, an example in which the apparatus for implementing the function of the network device is the network device may be used for description.

(3) Uplink power control may also be referred to as uplink transmit power control. In a central scheduling system in LTE, 5G, SparkLink, or the like, to ensure performance of a base station in receiving signals from a plurality of terminal devices, an uplink power control (or determining) solution is currently provided, so that the signals transmitted by the plurality of terminal devices correspond to a same PSD or close PSDs when reaching a receiver of the base station. As a result, the base station can receive the signals from these terminal devices using an appropriate level of AGC. The uplink power control solution may include two implementations: open-loop power control and closed-loop power control. Principles of the two implementations are mainly as follows:

Open-loop power control: The base station broadcasts an expected power spectral density PSD (which may be understood as a target PSD), a reference signal, and a transmit power of the reference signal. The terminal device may perform downlink measurement based on the reference signal and the transmit power of the reference signal that are received, to estimate a path loss. It is implicitly assumed that an uplink path loss and a downlink path loss are the same or close. Then, the terminal device may set a transmit power based on the estimated path loss and the expected PSD.

Closed-loop power control: The base station broadcasts an expected PSD (which is also understood as a target PSD), a reference signal, and a transmit power of the reference signal. The terminal device may perform downlink measurement based on the reference signal and the transmit power of the reference signal that are received, to estimate a path loss. It is implicitly assumed that an uplink path loss and a downlink path loss are the same or close. Then, the terminal device may set a transmit power based on the estimated path loss and the expected PSD. Further, the terminal device transmits a signal to the base station at the transmit power that is set. The base station compares a strength of the signal received from the terminal device with an expected signal strength, and determines an adjustment amount for the transmit power of the terminal device. Then, the base station may indicate, through signaling, the terminal device to adjust the transmit power of the terminal device based on the adjustment amount, or the base station changes a time-frequency resource for the terminal device, so that a PSD of the terminal device converges to the expected PSD.

For the foregoing open-loop power control or closed-loop power control, the base station expects that PSDs from all the terminal devices (nodes) are the same or close on a time axis. For example, as shown in FIG. 2, nodes correspond to a same PSD either in different slots or in a same slot.

(4) In embodiments of this application, at least one may alternatively be described as one or more, and more may be two, three, four, or more. This is not limited in this application.

In embodiments of this application, "/" may indicate an "or" relationship between associated objects. For example, A/B may indicate A or B. "and/or" may indicate that there are three relationships between associated objects. For example, A and/or B may indicate the following three cases: Only A exists, both A and B exist, and only B exists, where A and B may be singular or plural. In embodiments of this application, the terms such as "example" or "for example" indicate giving an example, an illustration, or a description. Any embodiment or design scheme described with "example" or "for example" should not be explained as being more preferred or having more advantages than another embodiment or design scheme. The terms such as "example" or "for example" are used to present a related concept in a specific manner for ease of understanding.

In embodiments of this application, the terms "group" and "group" have a same meaning. For example, "group 1" and "group 1" have a same meaning.

The technical solutions of this application are described below with reference to specific embodiments.

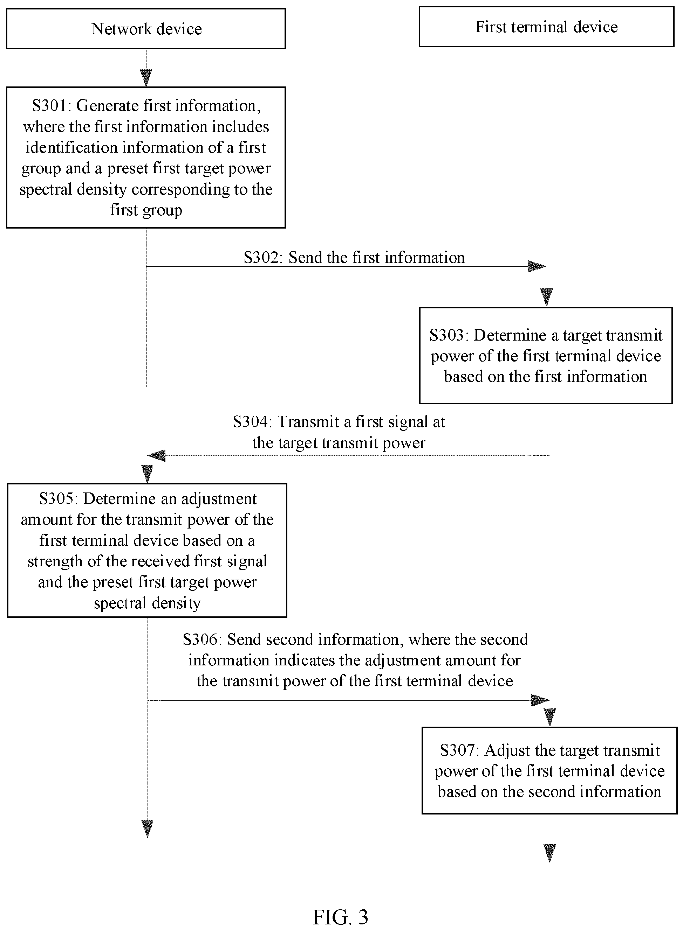

An embodiment of this application provides a transmit power determining method. The method is applicable to, but is not limited to, the architecture of the communication system in FIG. 1. The method in this embodiment of this application may be performed by an independent network device (or a first terminal device), or may be performed by a component (for example, a processor, a chip, or a chip system) of the network device (or the first terminal device), or may be performed by an apparatus that can be used in combination with the network device (or the first terminal device). This is specifically limited in this application. In addition, ordinal numbers such as "first" and "second" mentioned below are used to distinguish a plurality of objects for ease of description, but are not intended to limit an order, a time sequence, priorities, or importance of the plurality of objects. With reference to FIG. 3, a specific process of the method is as follows.

S301: The network device generates first information, where the first information includes identification information of a first group and a preset first target power spectral density corresponding to the first group.

For example, the network device may be an access network device such as a base station.

In an implementation, before performing step S301, the network device groups all terminal devices managed by the network device, and then sets a corresponding target power spectral density for each group, thereby establishing a mapping relationship (or a correspondence) between identification information (for example, a number or an ID) of each group and the target power spectral density. In addition, a most appropriate level of AGC on a receiver of the network device is correspondingly set for each group. To be specific, when receiving signals transmitted by terminal devices in a same group, the receiver of the network device automatically adjusts, using a level of AGC corresponding to the group, gains of the signals received from the terminal devices in the group, to ensure that the received signals are of appropriate strengths.

In embodiments of this application, the target power spectral density may be a PSD, commonly measured in dBm/MHz. The target power spectral density may alternatively be but is not limited to any one of the following:

(1) a power on each carrier, where a width of the carrier is determined by a specific protocol, and common widths are, for example, 1 MHz for Bluetooth and 20 MHz for Wi-Fi/SparkLink; and (2) a power on each subcarrier, where a width the subcarrier is also determined by a specific protocol, common widths are, for example, 312.5 kHz for Wi-Fi and 480 kHz for SparkLink.

A base station is used as an example. During grouping of terminal devices, the base station intends to group terminal devices whose received signal strength indicators (received signal strength indicators, RSSIs) are the same or close into one group, to maintain interference resistance of a terminal device that is at a short distance. A value of the RSSI is mainly determined by two factors: a transmit power of the terminal device and a path loss between the terminal device and the base station. A maximum value of the RSSI is usually determined by a maximum transmit power of the terminal device. Therefore, the base station may perform grouping in, but not limited to, the following two specific manners.

**Grouping manner 1:** When maximum transmit powers of all terminal devices managed by the base station are the same, the maximum transmit power is specified by a protocol or a regulatory domain. In this case, the base station may perform grouping based on path losses of the terminal devices, that is, group terminal devices whose path losses are the same or close into one group, and may set a corresponding target power spectral density for each group.

In embodiments of this application, path losses (path loss values) of terminal devices in a same group are the same, or a difference between path losses (path loss values) of terminal devices in a same group is less than a first value. The first value may be a preset value, or a preset range such as 3 dB to 10 dB.

For example, the base station first determines path losses corresponding to all UEs managed by the base station, namely, path losses corresponding to a UE(1), a UE(2), ..., and a UE(N), where N is a positive integer; and then the base station groups, based on the path losses corresponding to the N UEs, UEs whose path losses are the same or close (to be specific, a difference between the path losses falls within a range of 3 dB to 10 dB) into one group, to obtain a group 1, a group 2, ..., and a group M, where M is a positive integer.

**Grouping manner 2:** When maximum transmit powers of all terminal devices managed by the base station are different, the maximum transmit power of each terminal device is constrained by a capability of the terminal device, a protocol, and a regulatory domain together, and the maximum transmit power of each terminal device is related to a specific protocol and is reported by each terminal device to the base station. In this case, the base station may perform grouping based on a difference between the maximum transmit power and a corresponding path loss of each terminal device, that is, group terminal devices whose differences between respective maximum transmit powers and corresponding path losses are the same or close into one group, and may set a corresponding target power spectral density for each group.

For example, the base station first determines first differences (the first difference is a difference between a maximum transmit power of a UE and a path loss of the UE) corresponding to all UEs managed by the base station, namely, first differences corresponding to a UE(1), a UE(2), ..., and a UE(N), where N is a positive integer; and then the base station groups, based on the first differences corresponding to the N UEs, UEs whose first differences are the same or close into one group, to obtain a group 1, a group 2, ..., and a group M, where M is a positive integer.

In addition, the base station may alternatively perform grouping based on a distance between each UE and the base station. For a specific grouping manner, refer to Grouping manner 1 or Grouping manner 2. Details are not described herein again.

In embodiments of this application, UEs in a same group may perform uplink transmission with the base station in a time division multiplexing manner or a frequency division multiplexing manner, and UEs in different groups may perform uplink transmission with the base station in a time division multiplexing manner.

The base station may obtain a plurality of groups through the foregoing grouping, and then the base station sets a corresponding target power spectral density for each group. Specifically, a main factor involved in the solution in which the base station sets the corresponding target power spectral density for each group includes an automatic gain control (AGC) characteristic of a receiver of the base station. Generally, the base station may determine the target power spectral density for each group based on a received signal strength of the base station and a specific margin.

For example, the base station determines a corresponding target PSD for each group, namely, a PSD 1 corresponding to the group 1, a PSD 2 corresponding to the group 2, ..., and a PSD M corresponding to the group M. The base station may send, to each UE, mapping relationships between the M groups and the corresponding target PSDs (which are equivalent to preset second mapping information in the solutions of this application): {group 1: PSD 1}, {group 2: PSD 2}, ..., and {group M: PSD M}. In addition, the base station internally maintains the mapping relationships between the groups and the target PSDs. If a group to which a UE belongs changes, the base station may directly send a new transmit power value or a new target PSD to the corresponding UE. The mapping relationships may be represented in a form of information or table. This is not limited in this application.

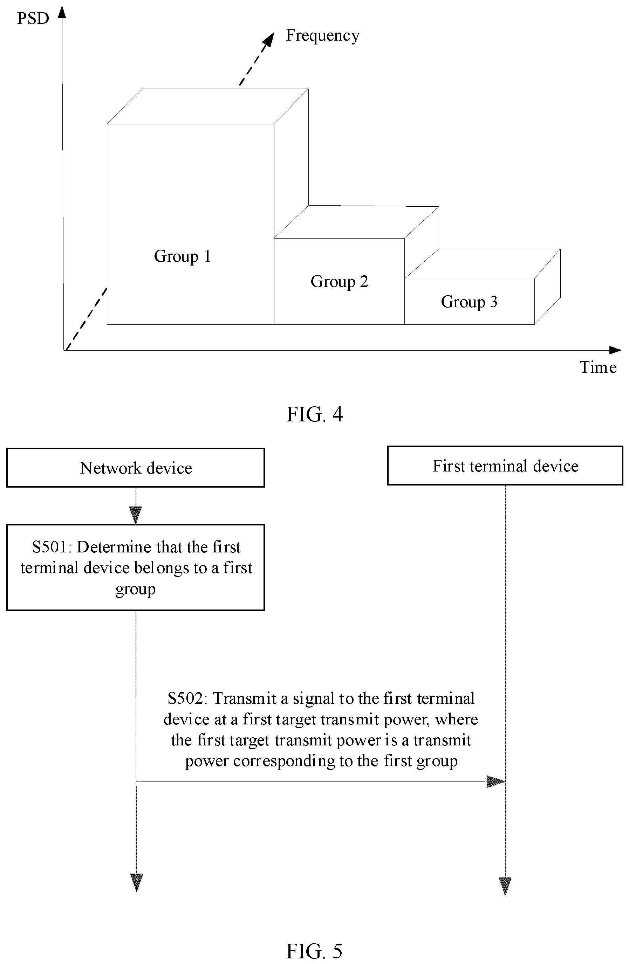

As a result of the foregoing grouping, target power spectral densities (such as PSDs) on a time axis may no longer be completely aligned, for example, as shown in FIG. 4.

According to the foregoing process, the network device may establish mapping relationships between a plurality of groups and a plurality of target power spectral densities (which are equivalent to the preset second mapping information in the solutions of this application). Then, before each terminal device transmits a signal to the network device, the network device may determine, based on a group to which each terminal device belongs, a target power spectral density corresponding to the group, and determine a target transmit power of each terminal device based on the target power spectral density of each terminal device.

Therefore, in the solutions of this application, the first terminal device is used as an example, and that the network device determines a transmit power of the first terminal device may be as follows.

In an implementation, before the network device generates the first information, the method further includes the following steps:

Step 1: The network device determines that the first terminal device belongs to the first group.

Step 2: The network device determines the preset first target power spectral density corresponding to the first group.

For step 1, that the network device determines that the first terminal device belongs to the first group may be implemented in, but not limited to, the following manners.

**Manner 1:** The network device first determines first path loss information of the first terminal device, and then determines, based on the first path loss information, that the first terminal device belongs to the first group.

In some embodiments, that the network device determines first path loss information of the first terminal device may include, but is not limited to, the following:

(a) The network device sends a first reference signal and transmit power information of the first reference signal to the first terminal device, and the network device receives the first path loss information from the first terminal device, where the first path loss information is determined based on a strength of the received first reference signal and the transmit power information of the first reference signal.

In the manner a, downlink path loss information between the first terminal device and the network device is determined. When a downlink path loss and an uplink path loss between the first terminal device and the network device are the same or close, the downlink path loss information between the first terminal device and the network device may be used as the downlink path loss information between the first terminal device and the network device (namely, the first path loss information).

(b) The network device receives a second reference signal and transmit power information of the second reference signal from the first terminal device, and the network device determines the first path loss information based on a strength of the received second reference signal and the transmit power information of the second reference signal.

For example, the first path loss information is an uplink path loss value or an estimated uplink path loss value between the first terminal device and the network device. The first reference signal and the second reference signal are known signals used for channel estimation or channel sounding, for example, channel state information-reference signals (channel state information-reference signals, CSI-RSs) or sounding reference signals (sounding reference signals, SRSs).

In some embodiments, the first path loss information is a first path loss value between the first terminal device and the network device, and that the network device determines, based on the first path loss information, that the first terminal device belongs to the first group may include, but is not limited to, the following:

(a) Determining, based on the first path loss value and preset first mapping information, that the first terminal device belongs to the first group, where the preset first mapping information includes a correspondence between the first path loss value and the identification information of the first group.

For example, in Grouping manner 1, the base station performs grouping based on the path losses corresponding to the UEs, to obtain the M groups: the group 1, the group 2, ..., and the group M, where M is a positive integer. Then, the base station may further establish mapping relationships between the groups and path losses. Specifically, each group may correspond to one comprehensive path loss, and the comprehensive path loss corresponding to each group may be an average value or a median value of path losses of all UEs in the group. Mapping relationships, finally determined by the base station, between all the groups and corresponding comprehensive path losses (which may be equivalent to the preset first mapping information in the foregoing solution of this application) may be represented as {group 1: comprehensive path loss 1}, {group 2: comprehensive path loss 2}, ..., and {group M: comprehensive path loss M}.

If the first path loss value of the first terminal device is equal to a value of the comprehensive path loss 1, the base station may determine, based on the mapping relationships between the groups and the comprehensive path losses (which are equivalent to the preset first mapping information), that the first terminal device belongs to the group 1.

(b) Determining, based on the first path loss value, that the first path loss value falls within a path loss range corresponding to the first group, and determining that the first terminal device belongs to the first group.

For example, in Grouping manner 1, the base station performs grouping based on the path losses corresponding to the UEs, to obtain the M groups: the group 1, the group 2, ..., and the group M, where M is a positive integer. Then, the base station may further establish mapping relationships between the groups and path loss ranges. Specifically, each group may correspond to one path loss range, a lower limit of the path loss range corresponding to each group is a path loss that is of a UE and is lowest in the group, and an upper limit of the path loss range corresponding to each group is a path loss that is of a UE and is highest in the group. The mapping relationships, finally determined by the base station, between all the groups and the corresponding path loss ranges may be represented as {group 1: path loss range 1}, {group 2: path loss range 2}, ..., and {group M: comprehensive range M}.

If the first path loss value of the first terminal device falls within the path loss range 1, the base station may determine that the first terminal device belongs to the group 1.

In embodiments of this application, path loss values of terminal devices in the first group are the same, or a difference between path loss values of terminal devices in the first group is less than the first value. The first value may be a preset value, or a preset range such as 3 dB to 10 dB.

Manner 2: The network device first determines a maximum transmit power and corresponding first path loss information that are of the first terminal device, and then determines, based on the maximum transmit power and the corresponding first path loss information that are of the first terminal device, that the first terminal device belongs to the first group.

In some embodiments, that the network device determines a maximum transmit power of the first terminal device may include, but is not limited to the following: The network device receives, from the first terminal device, information about the maximum transmit power of the first terminal device.

For example, the maximum transmit power of the first terminal device is constrained by a capability of the first terminal device, a protocol, and a regulatory domain together, and the maximum transmit power of the first terminal device is related to a specific protocol.

In some embodiments, for a manner in which the network device determines the first path loss information corresponding to the first terminal device, refer to the description in Manner 1. Details are not described herein again.

In some embodiments, the network device may determine, based on preset fourth mapping information and a difference between the maximum transmit power and the first path loss information that are of the first terminal device (which may be referred to as a first difference), that the first terminal device belongs to the first group, where the preset fourth mapping information includes a correspondence between the identification information of the first group and the first difference.

For example, in Grouping manner 2, the base station performs grouping based on a first difference between a maximum transmit power of each UE and a corresponding path loss, to obtain the M groups: the group 1, the group 2, ..., and the group M, where M is a positive integer. With reference to Manner 1 in which the network device determines that the first terminal device belongs to the first group, the base station may further establish mapping relationships between the plurality of groups (to be specific, identification information of the plurality of groups) and corresponding comprehensive differences (which may be equivalent to the preset fourth mapping information). The mapping relationships may be represented as {group 1: comprehensive difference 1}, {group 2: comprehensive difference 2}, ..., and {group M: comprehensive difference M}. One comprehensive difference corresponding to each group may be an average value or a median value of first differences corresponding to all UEs in the group. Alternatively, the base station may further establish mapping relationships between the plurality of groups (to be specific, identification information of the plurality of groups) and corresponding difference ranges (which may be equivalent to the preset fourth mapping information). The mapping relationships may be represented as {group 1: first difference range 1[lower limit 1, upper limit 1]}, {group 2: first difference range 2[lower limit 2, upper limit 2]}, ..., and {group M: first difference range M[lower limit M, upper limit M]}. A lower limit of a first difference range corresponding to each group is a first difference that is of a UE and is smallest in the group, and an upper limit of the first difference range corresponding to each group may be a first difference that is of a UE and that is largest in the group.

The first difference of the first terminal device is equal to the comprehensive difference corresponding to the group 1. In this case, the base station may determine, based on the mapping relationships between the plurality of groups and the corresponding comprehensive differences (which may be equivalent to the preset fourth mapping information), that the first terminal device belongs to the first group. Alternatively, the first difference corresponding to the first terminal device falls within the first difference range 1 corresponding to the group 1. In this case, the base station may determine that the first terminal device belongs to the group 1.

For specific implementations of Manner 2, refer to the implementations of Manner 1. Details are not described herein again.

For step 2, that the network device determines the preset first target power spectral density corresponding to the first group may include, but is not limited to, the following:

determining the preset first target power spectral density based on the identification information of the first group and preset second mapping information, where the preset second mapping information includes correspondences between identification information of the plurality of groups and a plurality of target power spectral densities, identification information of each group corresponds to one target power spectral density, and the identification information of the plurality of groups includes the identification information of the first group.

S302: The network device sends the first information to the first terminal device.

Correspondingly, the first terminal device receives the first information.

For example, the base station sends the first information to the first terminal device in a unicast mode; or the base station sends a system message in a broadcast mode, where the system message carries (or includes) the first information. After receiving the system message, the first terminal device parses the system message to obtain the first information.

S303: The first terminal device determines a target transmit power of the first terminal device based on the first information.

In an implementation, that the first terminal device determines a target transmit power based on the first information includes: The first terminal device determines the target transmit power of the first terminal device based on the preset first target power spectral density, the first path loss information corresponding to the first terminal device, and time-frequency resource information of the first terminal device.

In another implementation, if the first information sent by the network device to the first terminal device includes only the identification information of the first group, that the terminal device determines a transmit power of the first terminal device based on the first information may include: The first terminal device determines the preset first target power spectral density based on the identification information of the first group and the preset second mapping information, where the preset second mapping information includes the correspondences between the identification information of the plurality of groups and the plurality of target power spectral densities, the identification information of each group corresponds to one target power spectral density, and the identification information of the plurality of groups includes the identification information of the first group. Further, the first terminal device determines the target transmit power of the first terminal device based on the preset first target power spectral density, the first path loss information corresponding to the first terminal device, and time-frequency resource information of the first terminal device.

The preset second mapping information may be the mapping relationships, established by the network device, between the groups and the corresponding target power spectral densities in step S301, and is sent by the network device to the first terminal device in advance.

For example, a target transmit power P of the first terminal device may satisfy the following formula:

$$P = \min\{P_{max}, 10 \times \log 10(N) + PSD + PL + delta\}$$

$P_{max}$ represents the maximum transmit power of the first terminal device. N represents a quantity of subcarriers included in a current transmission (which is equivalent to the time-frequency resource information of the first terminal device). PSD represents the preset first target power spectral density, namely, a received power spectral density expected by the base station (namely, a receive end), and is measured based on a transmit power on one subcarrier. PL represents a path loss corresponding to the first terminal device. delta represents a relative value of a power adjustment amount received by the first terminal device from the base station (usually, the base station adjusts the transmit power of the terminal device). All power-related quantities are in a unit of dBm.

S304: The first terminal device transmits a first signal at the target transmit power.

Correspondingly, the network device receives the first signal from the first terminal device.

S305: The network device determines an adjustment amount for the transmit power of the first terminal device based on a strength of the received first signal and the preset first target power spectral density.

In an implementation, that the network device determines an adjustment amount for the transmit power of the first terminal device based on a strength of the received first signal and the preset first target power spectral density may include: first determining the transmit power of the first terminal device based on the preset first target power spectral density, the first path loss information of the first terminal device, and the time-frequency resource information of the first terminal device; and then determining the adjustment amount for the transmit power of the first terminal device based on the strength of the received first signal and the transmit power of the first terminal device.

S306: The network device sends second information to the first terminal device, where the second information indicates the adjustment amount for the transmit power of the first terminal device.

Correspondingly, the first terminal device receives the second information.

For example, the adjustment amount may be an absolute value, or a relative value such as +1 dB or -2 dB.

S307: The first terminal device adjusts the target transmit power of the first terminal device based on the second information.

In some embodiments, that the first terminal device adjusts the target transmit power of the first terminal device based on the first information includes: The first terminal device adjusts the target transmit power of the first terminal device based on the adjustment amount (relative value) indicated by the second information.

In some other embodiments, alternatively, the second information indicates the first terminal device to decrease the target transmit power based on the adjustment amount (absolute value), or the second information indicates the first terminal device to increase the target transmit power based on the adjustment amount (absolute value).

A solution corresponding to steps S301 to S304 is an open-loop power control manner, and a solution corresponding to steps S301 to S307 is a closed-loop power control manner.

In this embodiment of this application, the network device monitors a path loss status of the first terminal device in real time. When the path loss information (namely, the path loss value) of the first terminal device changes greatly, the network device may determine, for the first terminal device, a new group and a target power spectral density corresponding to the new group. The network device sends information to the first terminal device, to notify the first terminal device of identification information of the new group (for example, a number or an ID of the group) to which the first terminal device belongs and the target power spectral density corresponding to the new group. Then, the first terminal device may adjust the transmit power based on the target power spectral density corresponding to the new group.

In steps S301 to S307, the network device and the first terminal device are used as an example to describe how to determine the (uplink) transmit power of the first terminal device. In actual application, another terminal device that can communicate with the network device may determine a corresponding (uplink) transmit power with reference to the first terminal device. Details are not described herein again. In addition, in the foregoing solutions of this embodiment, interaction between the network device and the terminal device (the first terminal device) is used as an example, and the network device performs the following steps: grouping, setting the corresponding target power spectral density for each group, and indicating, to the first terminal device, the identification information of the group to which the first terminal device belongs and the corresponding preset first target power spectral density. In some embodiments, the foregoing solutions may not be limited to being applicable between the network device and the terminal device, and is also applicable between terminal devices or between other communication apparatuses. This is not specifically limited in this application.

In conclusion, this application provides an (uplink) transmit power determining method, where the method includes: A first terminal device receives first information, where the first information includes identification information of a first group and a preset first target power spectral density corresponding to the first group; and the first terminal device determines a target transmit power based on the first information. According to the method, a terminal device may determine a target transmit power based on a target power spectral density corresponding to a group to which the terminal device belongs. The method can significantly improve uplink resistance to burst interference. This can not only ensure performance of the network device (namely, a receiving side) in receiving signals from a plurality of terminal devices, but also effectively ensure quality of the signals transmitted by the terminal devices.

An embodiment of this application further provides a (downlink) transmit power determining method. The method is applicable to, but is not limited to, the architecture of the communication system in FIG. 1. The method in this embodiment of this application may be performed by an independent network device (or a terminal device), or may be performed by a component (for example, a processor, a chip, or a chip system) of the network device (or the terminal device). This is specifically limited in this application. With reference to FIG. 5, a specific process of the method is as follows.

S501: The network device determines that a first terminal device belongs to a first group.

For example, the network device may be an access network device such as a base station.

In an implementation, before step S501, the network device performs grouping, which is specifically implemented with reference to the manner in which the network device performs grouping in step S301. Details are not described herein again. In addition, after the network device performs grouping, the network device sets, for each group, a corresponding transmit power of the network device.

A base station is used as an example. For each group, the base station sets a corresponding target transmit power of the base station, and expects that an EVM of a signal received from the base station by a UE belonging to the group does not exceed specifications (to be specific, a transmit power-EVM curve) of a transmitter of the UE. Therefore, when the base station sets the corresponding target transmit power (namely, the transmit power of the base station) for each group, factors that need to be considered include a maximum transmit power of a UE, a transmit power-EVM curve of the UE, and a maximum received level of the base station.

For example, the base station performs grouping to obtain M groups, where M is a positive integer. A group 1 corresponds to a target transmit power 1 of the base station, a group 2 corresponds to a target transmit power 2 of the base station, ..., and a group M corresponds to a target transmit power 3 of the base station. Mapping relationships between the M groups and the corresponding target transmit powers of the base station (which are equivalent to preset third mapping information in the solutions of this application) may be represented as {group 1: target transmit power 1}, {group 2: target transmit power 2}, ..., and {group M: target transmit power M}.

In embodiments of this application, the base station performs downlink transmission with UEs in a same group in a time division multiplexing manner or a frequency division multiplexing manner, and the base station performs downlink transmission with UEs in different groups in a time division multiplexing manner.

In this embodiment of this application, that the network device determines that a first terminal device belongs to a first group may be implemented in, but not limited to, the following manners.

Manner 1: The network device determines first path loss information of the first terminal device, and then determines, based on the first path loss information, that the first terminal device belongs to the first group.

Manner 1 may be correspondingly implemented with reference to Manner 1 in step S301. Details are not described herein again.

Manner 2: The network device determines, based on a maximum transmit power and first path loss information that are of the first terminal device, that the first terminal device belongs to the first group.

Manner 2 may be correspondingly implemented with reference to Manner 2 in step S301. Details are not described herein again.

In embodiments of this application, terminal devices in the first group perform downlink transmission in a time division multiplexing manner or a frequency division multiplexing manner, and the first terminal device and a terminal device in another group perform downlink transmission in a time division multiplexing manner.

S502: The network device transmits a signal to the first terminal device at a first target transmit power, where the first target transmit power is a transmit power corresponding to the first group.

In an implementation, before the network device transmits the signal to the first terminal device at the first target transmit power, the method further includes: The network device determines the corresponding first target transmit power based on identification information of the first group and preset third mapping information, where the preset third mapping information includes correspondences between identification information of a plurality of groups and a plurality of target transmit powers, identification information of each group corresponds to one target transmit power, and the identification information of the plurality of groups includes the identification information of the first group.

For example, the base station determines that a UE 1 belongs to the group 1, and the group 1 corresponds to the target transmit power 1. In this case, the base station may transmit a signal to the UE 1 at the target transmit power 1.

Optionally, the method further includes: The network device sends, to the first terminal device, information about the first target transmit power used by the network device. The first terminal device determines, based on the information about the first target transmit power, the current first target transmit power at which the network device transmits the signal.

Then, the first terminal device determines an adjustment amount for the first target transmit power of the network device based on the first target transmit power and a strength of the received signal transmitted by the network device. The first terminal device may report, to the network device through signaling, the adjustment amount for the first target transmit power of the network device, so that the network device can adjust the first target transmit power based on the adjustment amount.

In conclusion, this application further provides a (downlink) transmit power determining method, to determine an appropriate downlink transmit power and therefore effectively improve quality of a transmitted signal.

In the foregoing embodiments provided in this application, the methods provided in embodiments of this application are described from a perspective of interaction between devices. To implement functions in the methods provided in embodiments of this application, the terminal device and the network device may include a hardware structure and/or a software module, and the foregoing functions are implemented in a form of hardware structure, or software module, or combination of a hardware structure and a software module. Whether a function in the foregoing functions is performed in the form of hardware structure, or software module, or combination of a hardware structure and a software module depends on particular applications and design constraints of the technical solutions.

In embodiments of this application, division into the modules is an example, and is merely division into logical functions. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of software functional module.

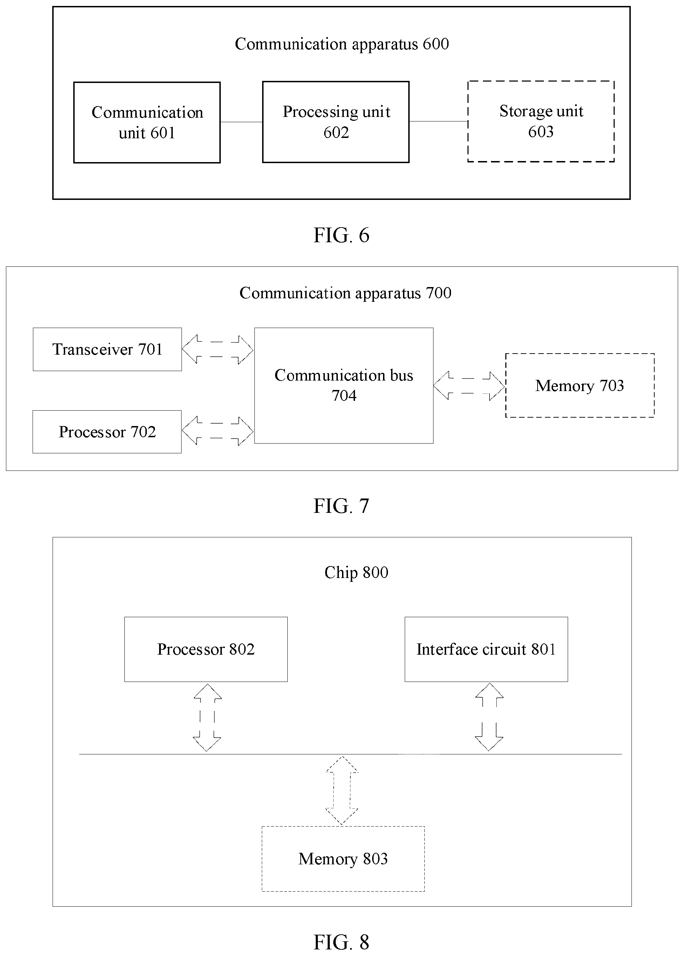

Based on a concept the same as the foregoing concept, as shown in FIG. 6, an embodiment of this application further provides a communication apparatus 600, which may be configured to implement a function of the first terminal device or the network device in the foregoing methods. For example, the communication apparatus may be a software module or a chip system. In embodiments of this application, the chip system may include a chip, or may include a chip and another discrete component. The communication apparatus 600 may include a communication unit 601 and a processing unit 602.

In embodiments of this application, the communication unit 601 may also be referred to as a transceiver unit, and may include a sending unit and/or a receiving unit, configured to respectively perform the sending and receiving steps of the first terminal device or the network device in the foregoing method embodiments. The processing unit 602 may be configured to read instructions and/or data in a storage module, to enable the communication apparatus 600 to implement the foregoing method embodiments.

Optionally, the communication apparatus 600 may further include a storage unit 603. The storage unit 603 is equivalent to a storage module, and may be configured to store instructions and/or data.

The following describes in detail a communication apparatus provided in embodiments of this application with reference to FIG. 6 and FIG. 7. It should be understood that descriptions of apparatus embodiments correspond to the descriptions of the method embodiments. Therefore, for content that is not described in detail, refer to the method embodiments. For brevity, details are not described herein again.

The communication unit 601 may also be referred to as a transceiver, a transceiver device, a transceiver apparatus, or the like. The processing unit 602 may also be referred to as a processor, a processing board, a processing module, a processing apparatus, or the like. Optionally, a component that is in the communication unit 601 and that is configured to implement a receiving function may be considered as a receiving unit, and a component that is in the communication unit 601 and that is configured to implement a sending function may be considered as a sending unit. In other words, the communication unit 601 includes the receiving unit and the sending unit. The communication unit sometimes may also be referred to as a transceiver device, a transceiver, a transceiver circuit, or the like. The receiving unit sometimes may also be referred to as a receiver device, a receiver, a receiving circuit, or the like. The sending unit sometimes may also be referred to as a transmitter device, a transmitter, a transmitting circuit, or the like.

When the communication apparatus 600 performs functions of the first terminal device in the procedure shown in FIG. 3 in the foregoing embodiment:

The communication unit 601 is configured to receive first information, where the first information includes identification information of a first group and a preset first target power spectral density corresponding to the first group. The processing unit 602 is configured to determine a target transmit power based on the first information.

When the communication apparatus 600 performs functions of the network device in the procedure shown in FIG. 3 in the foregoing embodiment:

The processing unit 602 is configured to generate first information, where the first information includes identification information of a first group and a preset first target power spectral density corresponding to the first group. The communication unit 601 is configured to send the first information to a first terminal device.

The foregoing are merely examples. The processing unit 602 and the communication unit 601 may further perform other functions. For more detailed descriptions, refer to related descriptions in the method embodiment shown in FIG. 3 or FIG. 5. Details are not described herein again.

FIG. 7 shows a communication apparatus 700 according to an embodiment of this application. The communication apparatus shown in FIG. 7 may be an implementation of a hardware circuit of the communication apparatus shown in FIG. 6. The communication apparatus 700 is applicable to the foregoing flowcharts, and performs functions of the first terminal device or the network device in the foregoing method embodiments. For ease of description, FIG. 7 merely shows main components of the communication apparatus.

As shown in FIG. 7, the communication apparatus 700 includes a transceiver 701 and a processor 702. The transceiver 701 and the processor 702 are coupled to each other. It may be understood that the transceiver 701 may be a communication interface or an input/output interface, or may be an interface circuit such as a transceiver circuit. Optionally, the communication apparatus 700 may further include a memory 703, configured to store instructions executed by the processor 702, or input data required for the processor 702 to run instructions, or data generated by the processor 702 running instructions.

When the communication apparatus 700 is configured to implement the method shown in FIG. 3 or FIG. 5, the processor 702 is configured to implement a function of the processing unit 602, and the transceiver 701 is configured to implement a function of the communication unit 601.

In this embodiment of this application, a specific connection medium among the transceiver 701, the processor 702, and the memory 703 is not limited. In this embodiment of this application, the memory 703, the processor 702, and the transceiver 701 are connected to each other through a communication bus 704 in FIG. 7. The communication bus 704 is represented by a bold line in FIG. 7. A connection manner between other components is merely described as an example, and is not limited thereto. The communication bus 704 may be classified into an address bus, a data bus, a control bus, and the like. For ease of representation, only one bold line is used for representation in FIG. 7, but this does not mean that there is only one bus or only one type of bus.

When the communication apparatus is a chip, FIG. 8 is a diagram of a simplified structure of the chip. A chip 800 includes an interface circuit 801 and one or more processors 802. Optionally, the chip 800 may further include a bus.

The interface circuit 801 may be configured to send or receive data, instructions, or information. The processor 802 may process the data, the instructions, or other information received through the interface circuit 801, and send processed information through the interface circuit 801.

The processor 802 may be an integrated circuit chip and has a signal processing capability. In an implementation process, the steps in the foregoing communication methods may be implemented through a hardware integrated logic circuit in the processor 802, or through instructions in a form of software. The processor 802 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 802 may implement or perform the methods and steps that are disclosed in embodiments of this application. The general-purpose processor may be a microprocessor, or the processor may be any conventional processor or the like.

Optionally, the chip further includes a memory 803. The memory 803 may include a read-only memory and a random access memory, and provide operation instructions and data for the processor. A part of the memory 803 may further include a non-volatile random access memory (NVRAM).

Optionally, the memory stores an executable software module or a data structure, and the processor may perform a corresponding operation by invoking operation instructions stored in the memory (the operation instructions may be stored in an operating system).

Optionally, the chip may be used in the first terminal device or the network device in embodiments of this application. Optionally, the interface circuit 801 may be configured to output an execution result of the processor 802. For a transmit power determining method provided in one or more embodiments of this application, refer to the foregoing embodiments. Details are not described herein again.

It should be noted that a function corresponding to each of the interface circuit 801 and the processor 802 may be implemented through hardware design, or software design, or a combination of software and hardware. This is not limited herein.

An embodiment of this application further provides a computer-readable storage medium. The computer-readable storage medium stores computer instructions used to implement the methods performed by the first terminal device in the foregoing method embodiments, and/or stores computer instructions used to implement the methods performed by the network device in the foregoing method embodiments.

For example, when a computer program is executed by a computer, the computer is enabled to implement the methods performed by the first terminal device or the network device in the foregoing method embodiments.

An embodiment of this application further provides a computer program product including instructions. When the instructions are executed by a computer, the computer is enabled to implement the methods performed by the first terminal device in the foregoing method embodiments, and/or when the instructions are executed by a computer, the computer is enabled to implement the methods performed by the network device in the foregoing method embodiments.

An embodiment of this application further provides a chip apparatus, including a processor. The processor is configured to invoke a computer program or computer instructions stored in a memory, to enable the processor to perform the transmit power determining method in the embodiment shown in FIG. 3 or FIG. 5.

In a possible implementation, an input of the chip apparatus corresponds to the receiving operation in the embodiment shown in FIG. 3 or FIG. 5, and an output of the chip apparatus corresponds to the sending operation in the embodiment shown in FIG. 3 or FIG. 5.

Optionally, the processor is coupled to the memory through an interface.

Optionally, the chip apparatus further includes a memory. The memory stores a computer program or computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control execution of a program of the transmit power determining method in the embodiment shown in FIG. 3 or FIG. 5. The memory mentioned in any one of the foregoing descriptions may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, refer to the embodiment of the corresponding transmit power determining method provided above. Details are not described herein again.

The communication apparatus in this application may include a hardware layer, an operating system layer running on the hardware layer, and an application layer running on the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

In embodiments of this application, division into the modules is an example, and is merely division into logical functions. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of software functional module.

Based on descriptions of the foregoing implementations, a person skilled in the art may clearly understand that embodiments of this application may be implemented by hardware, firmware, or a combination thereof. When embodiments of this application are implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. The computer-readable medium may include, for example, but is not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in a form of instruction or data structure and that can be accessed by a computer. In addition, any connection may be properly defined as a computer-readable medium. For example, if software is transmitted from a website, a server, or another remote source by using a coaxial cable, an optical fiber/cable, a twisted pair, a digital subscriber line (digital subscriber line, DSL), or wireless technologies such as infrared, radio, and microwave, the coaxial cable, the optical fiber/cable, the twisted pair, the DSL, or the wireless technologies such as infrared, radio, and microwave are included in a definition of a medium to which the coaxial cable, the optical fiber/cable, the twisted pair, the DSL, or the wireless technologies such as infrared, radio, and microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data magnetically, and the disc copies data optically by using a laser. The foregoing combination should also be included in the protection scope of the computer-readable medium.

In a word, the foregoing descriptions are merely embodiments of this application and are not intended to limit the protection scope of this application. Any modification, equivalent substitution, and improvement made according to the disclosure of this application shall fall within the protection scope of this application.

**Claims**

1. A transmit power determining method, comprising:

   receiving, by a first terminal device, first information, wherein the first information comprises identification information of a first group and a preset first target power spectral density corresponding to the first group; and determining, by the first terminal device, a target transmit power based on the first information.

2. The method according to claim 1, wherein the method further comprises:

   receiving, by the first terminal device, a first reference signal and a transmit power of the first reference signal; and sending, by the first terminal device, first path loss information, wherein the first path loss information is determined based on a strength of the received first reference signal and the transmit power of the first reference signal; or
   sending, by the first terminal device, a second reference signal and a transmit power of the second reference signal, wherein the second reference signal and the transmit power of the second reference signal are used to determine first path loss information.

3. The method according to claim 1 or 2, wherein the determining, by the first terminal device, a target transmit power based on the first information comprises:
   determining, by the first terminal device, the target transmit power of the first terminal device based on the preset first target power spectral density, the first path loss information, and time-frequency resource information of the first terminal device.

4. The method according to any one of claims 1 to 3, wherein the method further comprises:

   transmitting, by the first terminal device, a first signal at the target transmit power;
   receiving, by the first terminal device, second information, wherein the second information indicates an adjustment amount for the transmit power of the first terminal device; and
   adjusting, by the first terminal device, the target transmit power based on the second information.

5. The method according to any one of claims 1 to 4, wherein the receiving, by a first terminal device, first information comprises:

   receiving, by the first terminal device, the first information sent in a unicast mode; or
   receiving, by the first terminal device, a system message sent in a broadcast mode, and parsing the system message to obtain the first information.

6. The method according to any one of claims 1 to 5, wherein path loss values of terminal devices in the first group are the same, or a difference between path loss values of terminal devices in the first group is less than a first value.

7. The method according to any one of claims 1 to 6, wherein the first terminal device and another terminal device in the first group perform uplink transmission in a time division multiplexing manner or a frequency division multiplexing manner, and the first terminal device and a terminal device in another group perform uplink transmission in a time division multiplexing manner.

8. A transmit power determining method, comprising:

   generating first information, wherein the first information comprises identification information of a first group and a preset first target power spectral density corresponding to the first group; and
   sending the first information to a first terminal device.

9. The method according to claim 8, wherein before the generating first information, the method further comprises:

   determining first path loss information of the first terminal device;
   determining, based on the first path loss information, that the first terminal device belongs to the first group; and
   determining the preset first target power spectral density corresponding to the first group.

10. The method according to claim 9, wherein the determining first path loss information of the first terminal device comprises:

> sending a first reference signal and transmit power information of the first reference signal to the first terminal device; and
> receiving the first path loss information from the first terminal device, wherein the first path loss information is determined based on a strength of the received first reference signal and the transmit power information of the first reference signal; or
> receiving a second reference signal and transmit power information of the second reference signal from the first terminal device; and
> determining the first path loss information based on a strength of the received second reference signal and the transmit power information of the second reference signal.

11. The method according to claim 9, wherein the first path loss information is a path loss value, and the determining, based on the first path loss information, that the first terminal device belongs to the first group comprises:

> determining, based on the first path loss value and preset first mapping information, that the first terminal device belongs to the first group, wherein the preset first mapping information comprises a correspondence between the first path loss value and the identification information of the first group; or
> determining, based on the first path loss value, that the first path loss value falls within a path loss range corresponding to the first group, and determining that the first terminal device belongs to the first group.

12. The method according to claim 9, wherein the determining the preset first target power spectral density corresponding to the first group comprises:
determining the preset first target power spectral density based on the identification information of the first group and preset second mapping information, wherein the preset second mapping information comprises correspondences between identification information of a plurality of groups and a plurality of target power spectral densities, identification information of each group corresponds to one target power spectral density, and the identification information of the plurality of groups comprises the identification information of the first group.

13. The method according to any one of claims 8 to 12, wherein the method further comprises:

> receiving a first signal transmitted by the first terminal device;
> determining an adjustment amount for a transmit power of the first terminal device based on a strength of the received first signal and the preset first target power spectral density; and
> sending second information to the first terminal device, wherein the second information indicates the adjustment amount for the transmit power of the first terminal device.

14. The method according to claim 13, wherein the determining an adjustment amount for a transmit power of the first terminal device based on a strength of the received first signal and the preset first target power spectral density comprises:

> determining the transmit power of the first terminal device based on the preset first target power spectral density, the first path loss information of the first terminal device, and time-frequency resource information of the first terminal device; and
> determining the adjustment amount based on the strength of the received first signal and the transmit power of the first terminal device.

15. The method according to any one of claims 8 to 14, wherein the sending the first information to a first terminal device comprises:

> sending the first information to the first terminal device in a unicast mode; or
> sending a system message to the first terminal device in a broadcast mode, wherein the system message carries the first information.

16. The method according to any one of claims 8 to 15, wherein path loss values of terminal devices in the first group are the same, or a difference between path loss values of terminal devices in the first group is less than a first value.

17. The method according to any one of claims 8 to 16, wherein the first terminal device and another terminal device in the first group perform uplink transmission in a time division multiplexing manner or a frequency division multiplexing manner, and the first terminal device and a terminal device in another group perform uplink transmission in a time division multiplexing manner.

18. A communication apparatus, comprising a unit or a module configured to perform the method according to any one of claims 1 to 7, or a unit or a module configured to perform the method according to any one of claims 8 to 17.

19. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 7 through a logic circuit or by executing code instructions, or the processor is configured to implement the method according to any one of claims 8 to 17 through a logic circuit or by executing code instructions.

20. A computer program product, comprising a computer program, wherein when the computer program is executed by a communication apparatus, the method according to any one of claims 1 to 17 is implemented.

21. A computer-readable storage medium, wherein the storage medium stores a computer-readable program or instructions, and when the computer program or the instructions are executed by a communication apparatus, the method according to any one of claims 1 to 17 is implemented.

Communication
system 100

Network device 110

Terminal
device 101

Terminal
device 102

Terminal
device 103

Terminal
device 105

Terminal
device 104

Terminal
device 106

FIG. 1

PSD

Frequency

Slot 1

Slot 2

Slot 3

Time

FIG. 2

| Network device | | First terminal device |
|---|---|---|

S301: Generate first information, where the first information includes identification information of a first group and a preset first target power spectral density corresponding to the first group

S302: Send the first information

S303: Determine a target transmit power of the first terminal device based on the first information

S304: Transmit a first signal at the target transmit power

S305: Determine an adjustment amount for the transmit power of the first terminal device based on a strength of the received first signal and the preset first target power spectral density

S306: Send second information, where the second information indicates the adjustment amount for the transmit power of the first terminal device

S307: Adjust the target transmit power of the first terminal device based on the second information

FIG. 3

FIG. 4

FIG. 5

Communication apparatus 600

Communication
unit 601

Processing unit
602

Storage unit
603

FIG. 6

Communication apparatus 700

Transceiver 701

Communication bus
704

Memory 703

Processor 702

FIG. 7

Chip 800

Processor 802

Interface circuit 801

Memory 803

FIG. 8

## INTERNATIONAL SEARCH REPORT

| International application No. |
| --- |
| **PCT/CN2023/136569** |

| A. | CLASSIFICATION OF SUBJECT MATTER |
| --- | --- |

H04W 52/52(2009.01)i

According to International Patent Classification (IPC) or to both national classification and IPC

| B. | FIELDS SEARCHED |
| --- | --- |

Minimum documentation searched (classification system followed by classification symbols)

IPC:H04B,H04W,H04L,H04Q

Documentation searched other than minimum documentation to the extent that such documents are included in the fields searched

Electronic data base consulted during the international search (name of data base and, where practicable, search terms used)

CNTXT, ENTXTC, DWPI, WPABS, 3GPP: 功率, 基准, 标称, 控制, 密度, 组, 群, 路损, 路径损耗, 接收功率, 相近, 近似, 相同, PSD, group, PL, power, nominal, control, spectral, density, pathloss, RSSI, same

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111901859 A (ZTE CORP.) 06 November 2020 (2020-11-06) description, paragraphs 0037-0182 | 1-21 |
| X | CN 107770854 A (NTT DOCOMO INC.) 06 March 2018 (2018-03-06) description, paragraphs 0055-0068 | 1-21 |
| A | CN 101527958 A (ZTE CORP.) 09 September 2009 (2009-09-09) entire document | 1-21 |
| A | WO 2022068521 A1 (HUAWEI TECHNOLOGIES CO., LTD.) 07 April 2022 (2022-04-07) entire document | 1-21 |
| A | US 2020213160 A1 (DOOSTNEJAD, Roya et al.) 02 July 2020 (2020-07-02) entire document | 1-21 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 February 2024** | **20 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 626 093 A1**

| INTERNATIONAL SEARCH REPORT | | | | | | | International application No. |
|---|---|---|---|---|---|---|---|
| **Information on patent family members** | | | | | | | **PCT/CN2023/136569** |

| Patent document cited in search report | | | Publication date (day/month/year) | Patent family member(s) | | | Publication date (day/month/year) |
|---|---|---|---|---|---|---|---|
| CN | 111901859 | A | 06 November 2020 | WO | 2021228175 | A1 | 18 November 2021 |
| | | | | EP | 4152836 | A1 | 22 March 2023 |
| | | | | US | 2023239803 | A1 | 27 July 2023 |
| | | | | KR | 20230006577 | A | 10 January 2023 |
| CN | 107770854 | A | 06 March 2018 | US | 2020196245 | A1 | 18 June 2020 |
| | | | | WO | 2018033090 | A1 | 22 February 2018 |
| | | | | EP | 3503632 | A1 | 26 June 2019 |
| | | | | JP | 2019528630 | A | 10 October 2019 |
| | | | | CN | 109565756 | A | 02 April 2019 |
| CN | 101527958 | A | 09 September 2009 | | None | | |
| WO | 2022068521 | A1 | 07 April 2022 | EP | 4210400 | A1 | 12 July 2023 |
| | | | | CN | 114339975 | A | 12 April 2022 |
| US | 2020213160 | A1 | 02 July 2020 | | None | | |

Form PCT/ISA/210 (patent family annex) (July 2022)

**EP 4 626 093 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310075365X